# EUROPEAN PATENT APPLICATION

(11) **EP 1 571 072 A2**
(43) Date of publication of application: **07.09.2005**
(21) Application number: 05101654.1
(22) Date of filing: 03.03.2005
(51) Int. Cl.: B62J 7/08, B62J 7/00

(54) **Device for fixing a container to a bicycle**

(30) Priority: 04.03.2004 IT MO20040005 U
(71) Applicant: Bellelli S.R.L., 45021 Badia Polesine RO (IT)
(72) Inventor: Bellelli, Tiziano, 45100 Rovigo (IT)
(74) Representative: Modiano, Guido

(57) **Abstract**

A device (1) for fixing a container (C) to a bicycle, which comprises a plate (2), with one face (3a) of which it is possible to associate a container (C); the plate (2) has, at the opposite face (3b), means (4) for anchoring to a plate-like element (P), which is supported by a bar (B) for connection to the frame of a bicycle and is kept suspended, in a substantially horizontal position, above a wheel of the bicycle.

## Description

The present invention relates to a device for fixing a container to a bicycle.

Many kinds of device for fitting an accessory to bicycles or the like are known; one of them, commonly used to support a seat used to carry children, is composed of a plate-like element, which is kept suspended in a substantially horizontal position above one of the wheels of the bicycle and on the upper face of which said seat can be connected.

Said plate-like element, in particular, can be associated with the bicycle frame by means of a U-shaped bar, the curved portion of which is connected in a lower region to said element, while the free ends can be inserted in two corresponding openings formed in a so-called supporting block, which can be associated with the tube of the bicycle saddle.

The block is suitable to be connected to any kind of cylindrical tube and this allows to use the device universally, allowing to fit seats to any type of bicycle.

Moreover, said device is particularly flexible in use, since the seat can be separated from the plate-like element whenever the user does not need to carry a child on the bicycle.

In this circumstance, the plate-like element remains unoccupied and it is often necessary to use it as a rack, i.e., as a supporting surface for shopping bags, products, articles and any other object the user wishes to carry on his bicycle.

In order to ensure that these objects do not fall off the bicycle during transport, the user often tries to fix to the plate-like element a container, such as boxes, baskets or the like, in which said objects are placed.

Said container is commonly connected to the plate-like element by using wire, pieces of string, laces, ties or generic more or less elastic cords, which can be tied around said container and said plate-like element to retain them together.

As an alternative to the cords, the user generally uses brackets, posts or rigid supports provided in a makeshift fashion and adapted to the dimensions of the container and of the plate-like element to prevent their relative movements.

These kinds of fixing of the container to the plate-like element, by means of cords or the like and by means of rigid brackets, are not free from drawbacks, including the fact that they require operations for assembling/disassembling the container on/from said element that are particularly onerous and require a significant amount of time.

Moreover, it is noted that both cords and brackets do not ensure stable and reliable fixing and can cause the container to fall suddenly off the bicycle, putting at risk the integrity of the objects being carried.

The aim of the present invention is to eliminate the drawbacks noted above of the background art, by providing a device for fixing a container to a bicycle that allows to fit rapidly and conveniently a container to a plate-like element for supporting seats and allows equally rapid and convenient removal of said container.

Within this aim, an object of the present invention is to allow the user to fix the container stably to the plate-like element, avoiding any unwanted falling thereof off the bicycle.

Another object of the present invention is to provide a device that is simple, relatively easy to provide in practice, safe in use, effective in operation, and has a relatively low cost.

This aim and these and other objects that will become better apparent hereinafter are achieved by the present device for fixing a container to a bicycle, characterized in that it comprises a plate, with one face of which it is possible to associate a container, said plate having, at the opposite face, means for anchoring to a plate-like element that is supported by at least one bar for connection to the frame of a bicycle and is kept suspended, in a substantially horizontal position, above a wheel of said bicycle.

Further characteristics and advantages of the present invention will become better apparent from the following detailed description of a preferred but not exclusive embodiment of a device for fixing a container to a bicycle, illustrated by way of non-limiting example in the accompanying drawings, wherein:

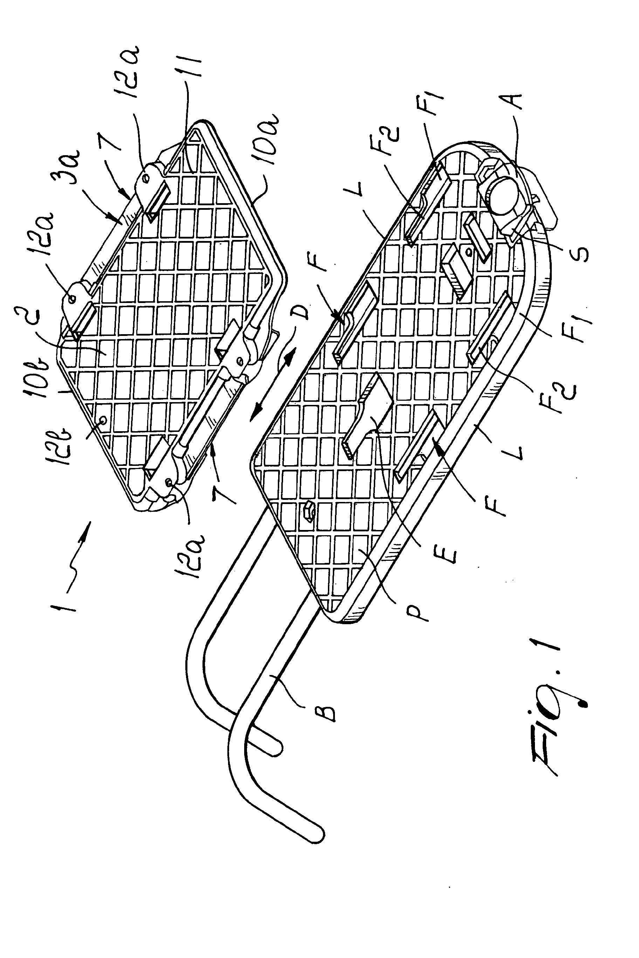

Figure 1 is a perspective view of the device according to the invention and of a plate-like element with which it is associable;

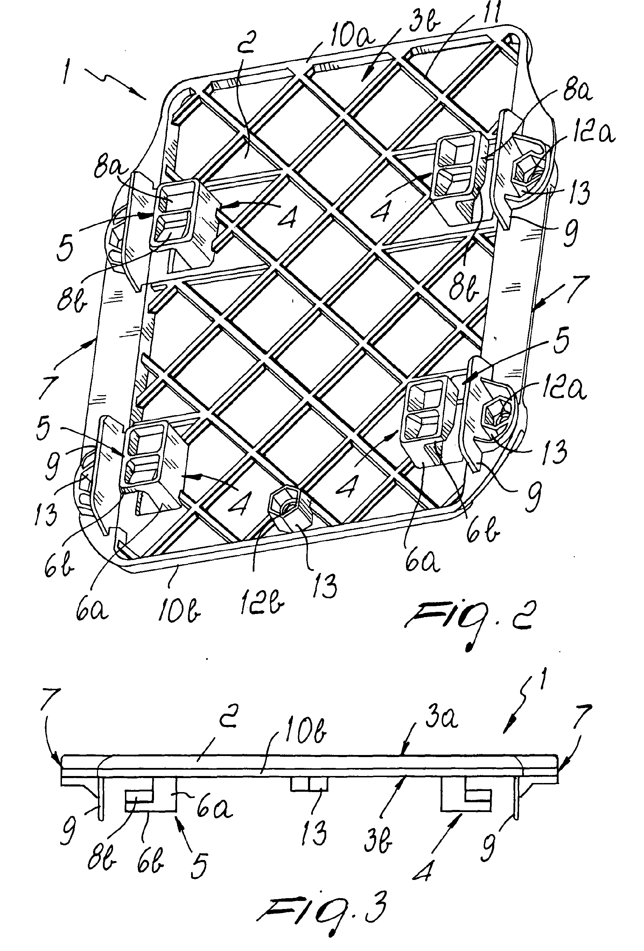

Figure 2 is a perspective view, taken from another angle, of the device according to the invention;
Figure 3 is a side view of the device according to the invention;

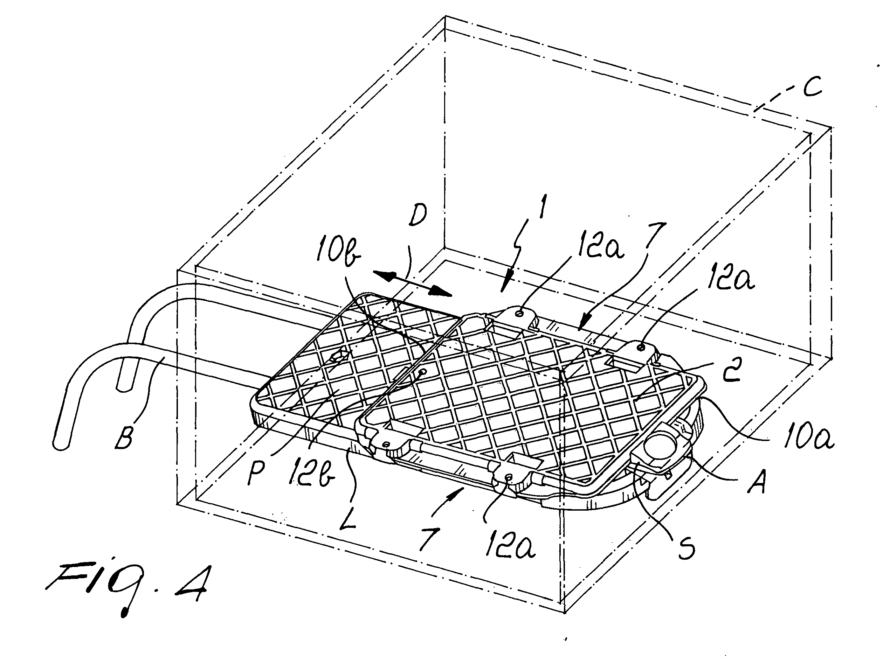

Figure 4 is a perspective view, shown in phantom lines, of a container associated with the plate-like element of Figure 1 by means of the device according to the invention.

With reference to the figures, the reference numeral 1 generally designates a device for fixing a container C to a bicycle.

In particular, the device 1 allows to fit any type of box or container to a plate-like element P supported on a bicycle.

Said plate-like element, which is substantially rectangular, is kept suspended in a horizontal position by a U-shaped bar B, the ends of which can be associated with a block for coupling to a portion of the frame of the bicycle, for example the tube that supports the saddle, and the curved part of which is connected in a lower region to said element.

The bicycle and the block are not shown in the figures, as they are of a known type.

According to the invention, the device 1 comprises a plate 2, with a first face 3a of which it is possible to associate the bottom of the container C; said plate has, at the second face 3b arranged opposite the first face, means 4 for anchoring to the upper surface of the plate-like element P.

In the embodiment of the present invention shown in the figures, the anchoring means 4 comprise four teeth 5, which protrude from the second face 3b, the plate-like element P being provided with four corresponding through slots F for the insertion of a respective tooth 5; however, alternative embodiments of the device 1 are also possible in which the slots are formed through the plate 2 while the plate-like element P is provided with the teeth that can be inserted in said slots.

Advantageously, the plate 2 is substantially quadrangular and each one of the teeth 5 is associated with said plate proximate to a corresponding vertex.

Each tooth 5, in particular, is substantially L-shaped and is composed of a first portion 6a, which protrudes substantially at right angles from the second face 3b and is elongated in a direction that is substantially parallel to the plate 2, and a second portion 6b, which instead protrudes from said first portion substantially at right angles thereto.

In greater detail, it is noted that the first portions 6a of the teeth 5 are all elongated in a direction that is substantially parallel to two mutually opposite sides 7 of the plate 2.

Each second portion 6b of the teeth 5, furthermore, forms a flat wall 8a, which is arranged so that it is parallel to the plate 2 at a distance from the second face 3b that is equal to the thickness of the plate-like element P, and an inclined wall 8b, which diverges from the flat wall 8a away from the second face 3b.

The slots F comprise a first wider portion F₁, which is substantially as wide as the second portion 6b, in order to allow the insertion of the tooth 5, and a second portion F₂, which is thinner and elongated in a direction D that is parallel to the plate-like element P and allows the snug sliding of the first portion 6a.

Once insertion in the slot F has been performed, the inclined wall 8b acts as a guiding profile to facilitate the sliding of the tooth 5 along the direction D; during this sliding, the flat wall 8a slides in contact with the lower surface of the plate-like element P and prevents the escape of the tooth 5 from the slot F, anchoring the plate 2 to the plate-like element P.

Further, the device 1 is provided with four wings 9 for centering the plate 2 with respect to the plate-like element P, each wing being associated with the plate 2 proximate to a corresponding tooth 5.

Said wings protrude substantially parallel to the first portions 6a of the teeth 5 from the two peripheral portions of the plate 2 formed by the mutually opposite sides 7 and in the anchoring configuration are suitable to be arranged so that they face, and are adjacent to, two mutually opposite sides L of the plate-like element P that are substantially parallel to the direction D.

The dimensions of the wings 9 transversely to the plate 2 are larger than the corresponding dimensions of the first portions 6a, so as to facilitate the relative positioning of said plate with respect to the plate-like element P before inserting the teeth 5 in the slots F.

The device 1 further comprises means for detachably locking the plate 2 and the plate-like element P in the anchoring configuration.

Said detachable locking means are formed by a side 10a of the plate 2 that is substantially perpendicular to the mutually opposite sides 7, the plate-like element P being provided with a corresponding elastically deformable flap A on which there is a protrusion S that can engage, in the anchoring configuration, by abutment the side 10a in order to prevent the sliding of the plate 2 with respect to the plate-like element P.

In the inactive position of the flap A, in particular, the protrusion S protrudes from the upper surface of the plate-like element P; in order to associate the plate 2 with said element, the flap A can be kept folded downward until the anchoring configuration is reached, in which it performs a snap motion, arranging the protrusion S in engagement against the side 10a.

In order to disengage the plate 2 from the plate-like element P, it is necessary to apply a similar pressure to the wing A in order to flex it and arrange the protrusion S so that it does not hinder the sliding of the plate 2.

It should be noted that in the particular embodiment shown in the figures, the flap A is formed on the plate-like element P, but alternative embodiments of the device 1 are also possible in which it is provided on the plate 2 in order to be engaged, in the anchoring configuration, by abutment on a corresponding side of said element that is substantially perpendicular to the direction D.

Corresponding pluralities of ridges 11 are formed on substantially all of the faces 3a and 3b of the plate 2 and inclined at approximately 45° with respect to the edges of said plate.

On the second face 3b, in particular, said ridges are thick and deep and act as a structural reinforcement for the plate 2; on the first face 3a, instead, they are narrow and small, the profile of said face being substantially flat, so as to facilitate the contact of the bottom of the container C.

Advantageously, on the plate 2 there are five through holes 12 for the insertion of means for fixing the container C to the plate 2, which are preferably of the type of bolts or the like, not shown in the figures as they are known.

In particular, four holes 12a are formed proximate to the four vertices of the plate 2, each hole being arranged opposite a tooth 5 with respect to the corresponding wing 9; the fifth hole 12b is instead formed at the side 10b of the plate 2 that lies opposite the side 10a.

A tubular portion 13 that has a hexagonal cross-section is further provided coaxially to each hole 12 and is suitable to prevent the rotation of the nut of a corresponding bolt during the fixing of the container C to the plate 2.

The tubular portion 13 that corresponds to the fifth hole 12b, in particular, protrudes substantially from the second face 3b and in the anchoring configuration is designed to be inserted in a slot E that is formed centrally on the plate-like element P.

In practice it has been found that the described invention achieves the intended aim and objects and in particular the fact is stressed that the use of a plate connected to the bottom of a container and rapidly and safely associable with the plate-like element supported on the bicycle makes it particularly easy and simple for the user to fit and remove the container from the bicycle.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

The disclosures in Italian Patent Application No. MO2004U000005, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for fixing a container to a bicycle, **characterized in that** it comprises a plate, with one face of which it is possible to associate a container, said plate having, at the opposite face, means for anchoring to a plate-like element that is supported by at least one bar for connection to the frame of a bicycle and is kept suspended, in a substantially horizontal position, above a wheel of said bicycle.

2. The device according to claim 1, **characterized in that** said anchoring means comprise at least one tooth that protrudes from said opposite face of the plate, said plate-like element being provided with at least one corresponding through slot for the insertion of said tooth.

3. The device according to one or more of the preceding claims, **characterized in that** said tooth is substantially L-shaped, being formed by a first portion, which protrudes substantially at right angles from said plate, and by a second portion, which protrudes from said first portion substantially at right angles thereto, the slot of said plate-like element comprising a first wider portion for the insertion of said tooth and a second narrower portion for the snug sliding of said first portion of the tooth, said second portion being suitable to provide the anchoring of said plate to said plate-like element.

4. The device according to one or more of the preceding claims, **characterized in that** said anchoring means comprise at least one slot formed through said plate, said plate-like element being provided with at least one corresponding tooth that can be inserted in said slot.

5. The device according to one or more of the preceding claims, **characterized in that** said slot comprises a first wider portion and a second elongated portion, said tooth of the plate-like element being substantially L-shaped and formed by a first portion, which protrudes substantially at right angles from said plate-like element, and by a second portion, which protrudes from said first portion substantially at right angles thereto, said tooth being insertable in said first portion and said first portion of the tooth being able to slide snugly in said second portion, said second portion being suitable to provide the anchoring of said plate to said plate-like element.

6. The device according to one or more of the preceding claims, **characterized in that** said plate is substantially quadrangular and said anchoring means comprise four of said teeth, each tooth being associated with said plate proximate to a corresponding vertex.

7. The device according to one or more of the preceding claims, **characterized in that** it comprises at least two wings for centering said plate with respect to said plate-like element, which run substantially parallel to each other from two mutually opposite peripheral portions of said plate and are suitable to be arranged, in the anchoring configuration, so that they face, and are adjacent to, two mutually opposite sides of said plate-like element that are substantially parallel to said second portion of the slot.

8. The device according to one or more of the preceding claims, **characterized in that** it comprises four of said wings, each associated with said plate proximate to a corresponding tooth.

9. The device according to one or more of the preceding claims, **characterized in that** it comprises means for the detachable locking of said plate and of said plate-like element in the anchoring configuration.

10. The device according to one or more of the preceding claims, **characterized in that** said detachable locking means comprise one side of said plate that is suitable, in the anchoring configuration, to be arranged substantially at right angles to said second portions of the slots, said plate-like element comprising a corresponding flap, which is elastically deformable and is provided with a protrusion that can engage, in the anchoring configuration, by abutment against said side in order to prevent the sliding of said plate with respect to said plate-like element.

11. The device according to one or more of the preceding claims, **characterized in that** said removable locking means comprise at least one flap, which is formed on said plate, is elastically deformable and is provided with a protrusion that can engage, in the anchoring configuration, by abutment on a corresponding side of said plate-like element that is substantially perpendicular to said second portions of the slots, in order to prevent the sliding of said plate with respect to said plate-like element.

12. The device according to one or more of the preceding claims, **characterized in that** it comprises a plurality of reinforcement ridges formed on at least one of said faces of the plate.

13. The device according to one or more of the preceding claims, **characterized in that** said face with which said container is associable has a substantially flat profile.

14. The device according to one or more of the preceding claims, **characterized in that** it comprises at least one hole formed through said plate for the insertion of means for fixing said container to said plate.

15. The device according to one or more of the preceding claims, **characterized in that** said fixing means are of the type of bolts or the like.

16. The device according to one or more of the preceding claims, **characterized in that** it comprises five of said holes.
